# EUROPÄISCHE PATENTSCHRIFT

(11) **EP 3 740 705 B1**
(45) Veröffentlichungstag und Bekanntmachung des Hinweises auf die Patenterteilung: **02.02.2022**
(21) Anmeldenummer: 18819076.3
(22) Anmeldetag: 10.12.2018
(51) Int. Cl.: F16H 61/32

(54) **ANTRIEBSSTRANG FÜR EIN KRAFTFAHRZEUG UND VERFAHREN ZUM STARTEN EINES VERBRENNUNGSMOTORS IN EINEM SOLCHEN ANTRIEBSSTRANG**
DRIVETRAIN FOR A MOTOR VEHICLE AND METHOD FOR STARTING AN INTERNAL COMBUSTION ENGINE IN SUCH A DRIVETRAIN
CHAÎNE CINÉMATIQUE POUR UN VÉHICULE AUTOMOBILE ET PROCÉDÉ SERVANT À DÉMARRER UN MOTEUR À COMBUSTION INTERNE DANS UNE CHAÎNE CINÉMATIQUE DE CE TYPE

(30) Priorität: 19.01.2018 DE 102018101202
(43) Veröffentlichungstag der Anmeldung: 25.11.2020
(73) Patentinhaber: Magna PT B.V. & Co. KG, 74199 Untergruppenbach (DE)
(72) Erfinder: BÜNDER, Carsten, 70563 Stuttgart (DE)
(74) Vertreter: Zangger, Bernd
(86) Internationale Anmeldenummer: PCT/EP2018/084224
(87) Internationale Veröffentlichungsnummer: WO 2019/141440

(56) Entgegenhaltungen:
- DE-A1-102010 021 598
- DE-A1-102011 106 019

## Beschreibung

Die vorliegende Erfindung betrifft einen Antriebsstrang für ein Kraftfahrzeug nach dem Oberbegriff des Anspruchs 1. Ferner betrifft die vorliegende Erfindung ein Verfahren zum Starten eines Verbrennungsmotors in einem Antriebsstrang eines Kraftfahrzeuges.

Auf dem Gebiet der Antriebsstränge, die einen Verbrennungsmotor aufweisen, ist es bekannt, zum Starten des Verbrennungsmotors einen speziell hierfür vorgesehenen elektrischen Startermotor (Anlasser) in den Antriebsstrang zu integrieren. Der elektrische Startermotor muss dabei eine gewisse Leistung haben, um den Verbrennungsmotor aus dem Stillstand anschleppen zu können, bis dieser zündet und anschließend selbst tätig laufen kann. Der Verbrennungsmotor muss dabei mindestens auf eine Startdrehzahl geschleppt werden, ab der der Verbrennungsmotor selbsttätig unter Zufuhr von Kraftstoff und bei geeigneter Ansteuerung (Zündanlage) hochdrehen kann. Diese Mindestdrehzahl liegt in der Regel unterhalb einer Leerlaufdrehzahl des Verbrennungsmotors, ist jedoch in der Regel größer als 200 U/min.

Je nach Fahrzeugtyp trägt der elektrische Startermotor nicht unerheblich zum Gesamtgewicht des Kraftfahrzeuges bei.

Auf dem Gebiet der Hybrid-Antriebsstränge ist es auch bekannt, den Verbrennungsmotor bedarfsweise mittels einer elektrischen Antriebsmaschine des Antriebsstranges zu starten. In Hybrid-Antriebssträngen dient eine elektrische Antriebsmaschine alternativ oder gemeinsam mit dem Verbrennungsmotor zum Antreiben des Kraftfahrzeuges. Die elektrische Antriebsmaschine kann beispielsweise koaxial zu einer Kurbelwelle des Antriebsmotors angeordnet sein. In anderen Varianten kann die elektrische Antriebsmaschine mit einem Eingang eines Übersetzungsgetriebes der Getriebeanordnung verbunden sein. Beispielsweise bei Doppelkupplungsgetrieben ist es bekannt, eine elektrische Antriebsmaschine an einen Getriebeeingang von einem der Teilgetriebe des Doppelkupplungsgetriebes anzuschließen. Bei dieser Variante sind verschiedene Hybridmodi möglich. Zum einen kann Antriebsleistung der elektrischen Antriebsmaschine zusätzlich zu der Antriebsleistung des Verbrennungsmotors bereitgestellt werden (Boostmodus). Ferner ist ein rein elektrisches Fahren mittels der elektrischen Antriebsmaschine möglich. In diesem Fall ist die zugeordnete Reibkupplung dieses Teilgetriebes geöffnet und eine Schaltkupplung in dem zugeordneten Teilgetriebe ist geschlossen. Ferner ist auch ein Starten des Verbrennungsmotors möglich. Hierzu werden die Schaltkupplungen des einen Teilgetriebes geöffnet. Die zugeordnete Reibkupplung wird geschlossen, und die Reibkupplung des anderen Teilgetriebes wird vorzugsweise geöffnet. Anschließend kann die elektrische Antriebsmaschine dazu verwendet werden, um den Verbrennungsmotor auf eine Startdrehzahl hoch zu schleppen. In einem solchen Doppelkupplungsgetriebe-Hybrid-Antriebsstrang sind auch weitere Hybrid-Antriebsmodi realisierbar, beispielsweise eine Rekuperation, etc.

In vielen Antriebssträngen ist es heutzutage gewünscht, einen Start-Stopp-Betrieb einzurichten. Dies bedeutet, dass auch bei einem verbrennungsmotorischen Betrieb der Verbrennungsmotor bei Stillstand des Fahrzeuges abgeschaltet wird, um den unnötigen Verbrauch von Kraftstoff beispielsweise beim Warten an einer Ampel zu vermeiden. Dabei ist es häufig notwendig, den Verbrennungsmotor zu stoppen und dann wieder neu zu starten. Dies kann einen negativen Einfluss auf den Ladezustand eines elektrischen Energiespeichers haben, der die elektrische Energie zum Betreiben des elektrischen Startermotors und/oder des elektrischen Antriebsmotors bereitstellt.

Bei Hybrid-Antriebssträngen kann es ferner sein, dass in einem bestimmten Hybrid-Antriebsmodus die elektrische Antriebsmaschine beispielsweise als Generator arbeitet (zum Zwecke der Rekuperation), und dann zum Wiederstarten eines Verbrennungsmotors nicht verwendbar ist. In diesem Fall muss zwangsläufig ein elektrischer Startermotor vorhanden sein, um den Verbrennungsmotor beispielsweise während der Fahrt und in einem Schubbetrieb starten zu können.

Das Dokument DE 10 2011 106 019 A1 beschreibt beispielsweise einen Antriebsstrangabschnitt eines Kraftfahrzeugs umfassend eine Verbrennungskraftmaschine, ein Zahnräderwechselgetriebe mit einer Schaltwalze zur Betätigung von Schaltelementen des Zahnräderwechselgetriebes und eine elektrische Maschine, die mit der Schaltwalze als deren Antrieb gekoppelt ist. Weiterhin beschreibt dieses Dokument eine Verwendung einer elektrischen Antriebseinheit, umfassend eine elektrische Maschine, deren Ausgangswelle über eine Koppelvorrichtung derart mit der Kurbelwelle einer Verbrennungskraftmaschine eines Kraftfahrzeugs sowie mit einem Eingangselement einer besonderen antreibbaren Einheit des Kraftfahrzeuges gekoppelt ist, dass eine von der elektrischen Maschine erzeugte rotatorische Kraft alternativ an die Kurbelwelle oder an das Eingangselement anlegbar ist.

Das Dokument DE 10 2010 021 598 A1 beschreibt beispielsweise eine Antriebsvorrichtung für eine hydraulische Pumpe, wobei die Antriebsvorrichtung über zwei Leistungsstränge verfügt und der eine Leistungsstrang von einem Verbrennungsmotor und der andere Leistungsstrang von einem Elektromotor antreibbar ist, wobei die beiden Leistungsstränge in einem Additionsgetriebe zusammengeführt sind. Es ist vor diesem Hintergrund eine Aufgabe der Erfindung, einen verbesserten Antriebsstrang für ein Kraftfahrzeug sowie ein verbessertes Verfahren zum Starten eines Verbrennungsmotors in einem solchen Antriebsstrang anzugeben.

Die obige Aufgabe wird gemäß der vorliegenden Erfindung mit einem Antriebsstrang gemäß Anspruch 1 und einem Verfahren nach Anspruch 3 gelöst. Eine vorteilhafte Weiterbildung der Erfindung ergibt sich aus dem abhängigen Anspruch 2.

Der Antriebsstrang weist hierbei vorzugsweise keinen eigenen elektrischen Startermotor mehr auf. Das Starten des Verbrennungsmotors erfolgt entweder immer mittels des elektrischen Aktuatormotors. In Hybrid-Antriebssträngen kann das Starten des Verbrennungsmotors vorzugsweise überwiegend mittels der elektrischen Antriebsmaschine erfolgen. In manchen Situationen kann es jedoch sinnvoll oder notwendig sein, den Verbrennungsmotor mittels des elektrischen Aktuatormotors zu starten.

Der elektrische Aktuatormotor ist eine elektrische Maschine, die nicht zum Antrieb des Kraftfahrzeuges ausgelegt ist. Der elektrische Aktuatormotor dient vielmehr dazu, mittelbar oder unmittelbar eine Komponente der Getriebeanordnung zu betätigen.

Die Komponente der Getriebeanordnung kann eine Kupplung sein. Die Getriebeanordnung kann beispielsweise eine Kupplungsanordnung mit einer oder zwei Reibkupplungen zum Anfahren des Kraftfahrzeuges beinhalten, sowie in manchen Ausführungsformen (bei Vorgelegegetrieben) Schaltkupplungen zum Ein- und Auslegen von Gangstufen. Der elektrische Aktuatormotor ist vorzugsweise unmittelbar oder mittelbar zum Betätigen einer Reibkupplung, die zwischen Verbrennungsmotor und Übersetzungsgetriebe geschaltet ist, und/oder zum Betätigen einer Schaltkupplung zum Ein- oder Auslegen einer Gangstufe ausgelegt.

Gemäß der vorliegenden Erfindung wird eine mechanische Antriebsleistung des elektrischen Aktuatormotors dazu verwendet, um eine Pumpe eines Hydraulikkreises anzutreiben.

Es ist allgemein bekannt, dass die Verwendung des elektrischen Aktuatormotors zum Starten des Verbrennungsmotors also in manchen Fällen eine direkte zwanghafte Drehkopplung des Aktuatormotors mit der Kurbelwelle beinhalten. Gemäß der vorliegenden Erfindung dient der Aktuatormotor jedoch zum Antreiben einer Pumpe, so dass die Startereinrichtung so hydraulisch betätigt wird.

Weiterhin weist gemäß der vorliegenden Erfindung die Startereinrichtung einen Hydromotor auf, mittels dessen der Verbrennungsmotor startbar ist, wobei der Hydromotor mit einer Fluidleitung eines Hydraulikkreises der Aktuatoranordnung verbindbar ist, wobei der Hydraulikkreis eine Aktuatorpumpe aufweist, die mittels des wenigstens einen elektrischen Aktuatormotors angetrieben wird und dazu ausgebildet ist, einen Fluidvolumenstrom zum Antreiben des Hydromotors in der Fluidleitung bereitzustellen.

Die Aufgabe wird somit vollkommen gelöst.

Der Hydromotor ist vorzugsweise ein hydrostatischer Hydromotor. Der Hydromotor ist vorzugsweise zwischen dem Verbrennungsmotor und einem Eingangsglied einer Kupplungsanordnung bzw. einem Eingangsglied der Getriebeanordnung angeordnet. Der Hydromotor wirkt vorzugsweise direkt auf eine Kurbelwelle des Verbrennungsmotors und/oder ist koaxial hierzu angeordnet.

Die elektromotorisch angetriebene Aktuatorpumpe ist mittels des elektrischen Aktuatormotors angetrieben. Die Aktuatorpumpe dient innerhalb der Aktuatoranordnung ansonsten dazu, einen Fluiddruck und/oder einen Fluidvolumenstrom zum Betätigen der wenigstens einen

Komponente der Getriebeanordnung bereitzustellen.

Vorzugsweise ist eine Umschaltanordnung vorgesehen, so dass die mittels des elektrischen Aktuatormotors angetriebene Aktuatorpumpe entweder dazu dient, die wenigstens eine Komponente der Getriebeanordnung zu betätigen, oder dazu dient, den Hydromotor mit einem Fluidvolumenstrom zu versorgen, derart, dass dieser die Kurbelwelle des Verbrennungsmotors in Drehung versetzt und auf eine Startdrehzahl bringt.

Dabei ist es von besonderem Vorteil, wenn die Aktuatoranordnung wenigstens einen Pumpenaktuator aufweist, der die elektromotorisch angetriebene Aktuatorpumpe beinhaltet, wobei die Aktuatorpumpe einen Druckanschluss aufweist, der über eine Ventilanordnung mit einem Aktuatorzylinder zum Betätigen der wenigstens einen Komponente verbunden ist, und wobei die Ventilanordnung umschaltbar ist, um einen an dem Druckanschluss bereitgestellten Fluidvolumenstrom zu dem Hydromotor der Startereinrichtung zu leiten.

Ein Pumpenaktuator basiert generell auf einem Konzept, bei dem ein Druck in einem Aktuatorzylinder durch Einstellen der Drehzahl des elektrischen Aktuatormotors und damit der Drehzahl der Aktuatorpumpe geregelt wird. Mit anderen Worten wird die Kraft, die beispielsweise auf eine Reibkupplung ausgeübt wird, um diese zu schließen, durch Einstellen der Drehzahl des Aktuatormotors auf einen gewünschten Wert geregelt. Ein Druckanschluss einer solchen Aktuatorpumpe eines Pumpenaktuators ist dabei in der Regel direkt mit dem Aktuatorzylinder verbunden. Unter einer direkten Verbindung wird hierbei verstanden, dass keine druckregelnden Proportionalventile dazwischengeschaltet sind. Dies hat insbesondere den Vorteil, dass der Hydraulikkreis dann bei geringen Anforderungen an die Reinheit montierbar ist. Eine direkte Verbindung kann jedoch beinhalten, dass zwischen dem Druckanschluss und dem Aktuatorzylinder ein Wegeventil angeordnet ist. In einer Aktuatorstellung des Wegeventils ist vorzugsweise eine direkte Verbindung zwischen dem Druckanschluss und dem Aktuatorzylinder eingerichtet.

Die Ventilanordnung ist vorzugsweise von einer Stellung, bei der eine solche direkte Verbindung eingerichtet ist, in eine Stellung umschaltbar, bei der der von der Aktuatorpumpe bereitgestellte Volumenstrom nicht zum Regeln einer Kraft des Aktuatorzylinders dient, sondern vorzugsweise ausschließlich dem Hydromotor der Startereinrichtung zugeleitet wird, um den Verbrennungsmotor zu starten.

Insgesamt wird in vorteilhafter Weise eine Aktuatorik einer Getriebeanordnung, die ohnehin vorhanden ist, dazu verwendet, um einen Verbrennungsmotor zu starten, und zwar gemäß der vorliegenden Erfindung in Verbindung mit einem Hydromotor. Generell können hierdurch Bauraum-, Gewichts- und/oder Kosteneinsparungen realisiert werden, da Hydromotoren in der Regel günstiger und leichter sind als herkömmliche elektrische Startermotoren (Anlasser). Es können auch mehrere Pumpenaktuatoren zusammengeschaltet werden, um den Hydromotor mit einem gemeinschaftlichen Fluidvolumenstrom zu versorgen. Durch eine Ventilanordnung (ein Wegeventil, insbesondere solenoidgesteuert) kann dabei gewährleistet werden, dass ein derartiger Verbrennungsmotorstartvorgang keine Funktion auf die Getriebeanordnung hat.

Bei Start-Stopp-Systemen kann es vorteilhaft sein, ein Leerlaufen der Reibkupplungen, insbesondere eines Aktuatorzylinders für eine solche Reibkupplung, zu verhindern, indem die Ventilanordnung für eine entsprechende Dichtheit sorgt.

Generell ist es denkbar, dass ein Aktuatormotor und/oder eine Aktuatorpumpe der Aktuatoranordnung für den Zweck des Startens des Verbrennungsmotors größer dimensioniert wird bzw. werden. Dies kann jedoch ggf. in Kauf genommen werden, da der Antriebsstrang dann vorzugsweise keinen separaten elektrischen Startermotor beinhalten muss.

Ein Ausführungsbeispiel der Erfindung ist in der Zeichnung dargestellt und wird in der nachfolgenden Beschreibung näher erläutert. Es zeigt:

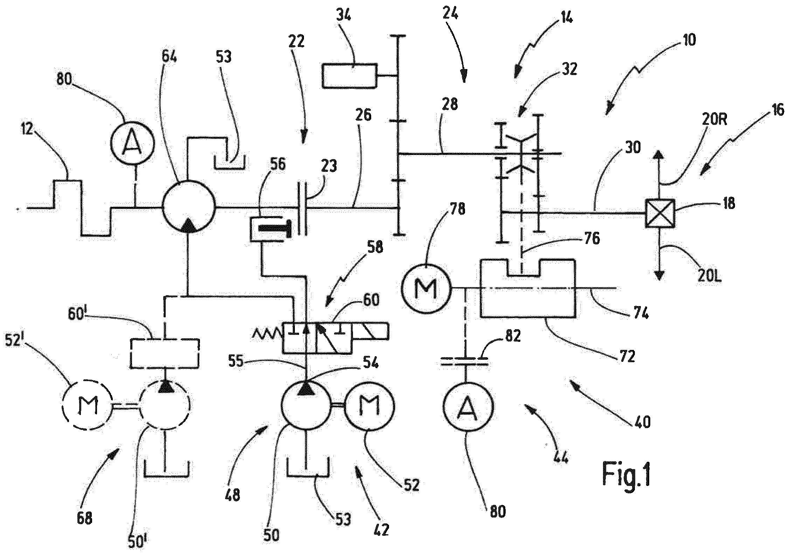

- Fig. 1: eine schematische Darstellung eines Antriebsstranges gemäß einer Ausführungsform der Erfindung.

In Fig. 1 ist in schematischer Form ein Antriebsstrang für ein Kraftfahrzeug, insbesondere ein Personenkraftwagen, dargestellt und generell mit 10 bezeichnet. Der Antriebsstrang 10 beinhaltet einen Verbrennungsmotor 12. Ferner weist der Antriebsstrang 10 eine Getriebeanordnung 14 auf, die eingangsseitig mit dem Verbrennungsmotor 12 verbunden ist und die ausgangsseitig mit einem Abtrieb 16 verbunden ist. Der Abtrieb 16 kann beispielsweise ein Differential 18 aufweisen, mittels dessen Antriebsleistung auf angetriebene Räder 20L, 20R verteilbar ist.

Die Getriebeanordnung 14 beinhaltet eine Kupplungsanordnung 22 mit einer Kupplung 23, die zum Anfahren des Kraftfahrzeuges dient. Ein Eingangsglied der Kupplungsanordnung 22 ist mit einer Kurbelwelle des Verbrennungsmotors 12 verbunden. Ein Ausgangsglied der Kupplungsanordnung 22 ist mit einem Übersetzungsgetriebe 24 verbunden, das vorliegend als Vorgelegegetriebe ausgebildet ist, jedoch auch ein Wandlerautomatikgetriebe sein könnte, ein stufenloses Getriebe, etc.

Das Übersetzungsgetriebe 24, das vorliegend als Stufengetriebe ausgebildet ist, weist eine Eingangswelle 26 auf, die mit dem Ausgangsglied der Kupplungsanordnung 22 verbunden ist. Ferner beinhaltet das Übersetzungsgetriebe 24 eine Vorgelegewelle 28 und eine Ausgangswelle 30. Die Ausgangswelle 30 ist mit einem Eingangsglied des Differentials 18 verbunden.

In an sich bekannter Weise sind die Vorgelegewelle 28 und die Ausgangswelle 30 über eine Mehrzahl von schaltbaren Radsätzen miteinander verbunden. Jeder Radsatz weist ein mit einer Welle verbundenes Festrad und ein damit kämmendes, an einer anderen Welle drehbar gelagertes Losrad auf. In Fig. 1 sind aus Übersichtsgründen nur zwei derartige Radsätze gezeigt, zwischen denen ein Schaltkupplungspaket 32 angeordnet ist. Das Schaltkupplungspaket 32 dient dazu, alternativ den einen Radsatz oder den anderen Radsatz in den Leistungsfluss zu schalten. Das Schaltkupplungspaket 32 kann beispielsweise zwei Synchron-Schaltkupplungen üblicher Bauweise beinhalten.

Ferner ist in Fig. 1 gezeigt, dass der Antriebsstrang 10 auch als Hybrid-Antriebsstrang ausgebildet sein kann. Hierzu kann eine elektrische Antriebsmaschine 34 vorgesehen sein, die dazu ausgebildet ist, Antriebsleistung zum Antreiben des Kraftfahrzeugs bereitzustellen. Vorliegend ist die elektrische Antriebsmaschine 34 an einen Radsatz des Übersetzungsgetriebes 24 angebunden.

Ferner ist gezeigt, dass die Kupplungsanordnung 22 eine einzelne Reibkupplung 23 beinhaltet. Im Falle eines Doppelkupplungsgetriebes kann die Kupplungsanordnung 22 jedoch auch zwei Reibkupplungen beinhalten. In diesem Fall ist das Übersetzungsgetriebe in ein erstes Teilgetriebe und ein zweites Teilgetriebe unterteilt, die jeweils einer der Reibkupplungen zugeordnet sind.

Die Getriebeanordnung 14 ist automatisiert betätigbar. Zu diesem Zweck weist der Antriebsstrang 10 eine Aktuatoranordnung 40 auf. Die Aktuatoranordnung 40 beinhaltet eine Kupplungsaktuatoreinrichtung 42 zum Betätigen der Reibkupplung 23 (oder von zwei Kupplungen einer Doppelkupplungsanordnung), sowie eine Getriebeaktuatoreinrichtung 44 zum Ein- und Auslegen von Gangstufen des Übersetzungsgetriebes 24, indem den Gangstufen zugeordnete Radsätze in den Leistungsfluss geschaltet bzw. aus diesem herausgenommen werden.

Die Kupplungsaktuatoreinrichtung 42 weist einen Pumpenaktuator 48 auf. Der Pumpenaktuator 48 beinhaltet eine Pumpe 50, die mittels eines elektrischen Aktuatormotors 52 angetrieben ist. Die Pumpe 50 weist einen nicht näher bezeichneten Sauganschluss auf, der mit einem Tank 53 des Antriebsstranges 10 verbunden ist. Ein Druckanschluss 54 der Pumpe 50 ist mit einer Fluidleitung 55 verbunden, die den Druckanschluss 54 direkt mit einem Aktuatorzylinder 56 verbinden kann. Der Aktuatorzylinder 56 wirkt auf die normalerweise geöffnete (oder normalerweise geschlossene) Reibkupplung 23, um diese zu schließen (oder zu öffnen). Hierbei übt der Aktuatorzylinder 56 einen Anpressdruck aus. Über den Anpressdruck kann eingestellt werden, wie hoch ein von der Reibkupplung 23 übertragbares Drehmoment ist. Der Betätigungsdruck und damit das Drehmoment der Reibkupplung 23 werden vorliegend mittels des Pumpenaktuators geregelt, und zwar indem die Drehzahl des elektrischen Aktuatormotors entsprechend eingestellt wird. Zur Verbesserung der Regelbarkeit kann die Fluidleitung 55 über eine Blende mit dem Tank verbunden sein, was in Fig. 1 jedoch nicht dargestellt ist.

Vorliegend ist zwischen den Druckanschluss 54 und den Aktuatorzylinder 56 eine Ventilanordnung 58 geschaltet, die ein 3/2-Wegeventil beinhaltet. Das 3/2-Wegeventil 60 ist mittels einer Feder in eine Grundposition vorgespannt, bei der der Druckanschluss 54 direkt mit dem Aktuatorzylinder 56 verbunden ist. Das 3/2-Wegeventil 60 ist mittels eines Elektromagneten in eine zweite Position versetzbar, bei der der Druckanschluss 54 der Aktuatorpumpe 50 mit einem Hydromotor 64 verbunden ist (und nicht mehr mit dem Aktuatorzylinder 56). Der Hydromotor 64 ist zum Starten des Verbrennungsmotors 12 ausgelegt. Zu diesem Zweck ist der Hydromotor 64 vorzugsweise koaxial zu einer nicht näher bezeichneten Kurbelwelle des Verbrennungsmotors 12 angeordnet. Der Hydromotor kann beispielsweise als Radialkolbenmotor ausgebildet sein. Der Hydromotor 64 arbeitet, wie eine Pumpe, nach dem Verdrängerprinzip. Ein Fluidvolumenstrom, der über die Fluidleitung 55 aus dem Druckanschluss 54 der Pumpe 50 bereitgestellt wird, beinhaltet hydrostatische Energie, die in dem Hydromotor in mechanische Energie umgewandelt wird, insbesondere in eine Drehung einer Welle des Hydromotors, die vorliegend mit der Kurbelwelle des Verbrennungsmotors 12 gekoppelt oder koppelbar ist.

Auf diese Weise kann gemäß der vorliegenden Erfindung der Verbrennungsmotor mittelbar unter Verwendung des elektrischen Aktuatormotors gestartet werden. Zu diesem Zweck wird die Ventilanordnung 58 umgeschaltet und der elektrische Aktuatormotor 52 wird angetrieben, damit die Pumpe 50 einen Fluidvolumenstrom zum Antreiben des Hydromotors bereitstellt.

In manchen Aktuatoranordnungen ist ein zweiter Pumpenaktuator 68 vorgesehen, der identisch aufgebaut sein kann wie der Pumpenaktuator 48, also mit einer Pumpe 50', die mittels eines weiteren elektrischen Aktuatormotors 52' angetrieben ist und deren Druckanschluss mit einer nicht näher bezeichneten weiteren Komponente (beispielsweise einer zweiten Reibkupplung einer Kupplungsanordnung) verbunden ist, vorzugsweise über eine Ventilanordnung 60', so dass auch die weitere Pumpe 50' dazu ausgelegt sein kann, einen weiteren Fluidvolumenstrom zum Antreiben des Hydromotors 64 bereitzustellen.

Die Getriebeaktuatoreinrichtung 44 weist eine Schaltwalze 72 auf, die um eine Drehachse 74 herum drehbar ist. Eine nicht näher bezeichnete Schaltkontur der Schaltwalze 72 ist mit einem Mitnehmer 76 gekoppelt, der ferner mit dem Schaltkupplungspaket 32 gekoppelt ist. Durch Antreiben der Schaltwalze 72 mittels eine elektrischen Schaltwalzenmotors 78 (weiterer elektrischer Aktuatormotor) kann das Schaltkupplungspaket 32 betätigt werden, um den einen oder den anderen Radsatz in den Leistungsfluss zu schalten bzw. den jeweils anderen aus dem Leistungsfluss zu nehmen.

In Fig. 1 ist schematisch angedeutet, dass der elektrische Schaltwalzenmotor 78 über eine Koppeleinrichtung 80 mit der Kurbelwelle des Verbrennungsmotors 12 gekoppelt sein kann (gezeigt bei A). Dies kann über eine nicht näher dargestellte Kupplung 82 erfolgen, so dass bei geschlossener Kupplung 82 Antriebsleistung des elektrischen Aktuatormotors 78 zum Drehen der Kurbelwelle 12 und folglich zum Starten des Verbrennungsmotors verwendbar ist, wobei diese Ausführungsform nicht durch die beanspruchte Erfindung abgedeckt wird.

Der elektrische Schaltwalzenmotor 78 könnte zu diesem Zweck beispielsweise eine erste Antriebswelle zum Antreiben der Schaltwalz 72 und eine sich in entgegengesetzter axialer Richtung erstreckende zweite Antriebswelle aufweisen, die über einen Radsatz, ein Zugmittelgetriebe oder Ähnliches die Kurbelwelle antreibt.

## Patentansprüche

1. Antriebsstrang (10) für ein Kraftfahrzeug, mit
- einem Verbrennungsmotor (12) und einer Startereinrichtung (64), wobei der Verbrennungsmotor mittels der Startereinrichtung startbar ist,
- einer Getriebeanordnung (14), über die Antriebsleistung von dem Verbrennungsmotor (12) auf einen Abtrieb (16) des Kraftfahrzeugs führbar ist und die wenigstens eine automatisierbar betätigbare Komponente (23; 32) aufweist, und
- einer Aktuatoranordnung (40), die wenigstens einen elektrischen Aktuatormotor (52; 78) aufweist, mittels dessen die wenigstens eine Komponente (23; 32) der Getriebeanordnung betätigbar ist,
wobei der wenigstens eine elektrische Aktuatormotor (52; 78) mit der Startereinrichtung gekoppelt ist, um den Verbrennungsmotor (12) mittels des wenigstens einen elektrischen Aktuatormotors (52; 78) starten zu können. **dadurch gekennzeichnet, dass** die Startereinrichtung einen Hydromotor (64) aufweist, mittels dessen der Verbrennungsmotor (12) startbar ist, wobei der Hydromotor (64) mit einer Fluidleitung (55) eines Hydraulikkreises (42) der Aktuatoranordnung (40) verbindbar ist, wobei der Hydraulikkreis (62) eine Aktuatorpumpe (50) aufweist, die mittels des wenigstens einen elektrischen Aktuatormotors (52) angetrieben wird und dazu ausgebildet ist, einen Fluidvolumenstrom zum Antreiben des Hydromotors (64) in der Fluidleitung (55) bereit zu stellen.

2. Antriebsstrang nach Anspruch 1, **dadurch gekennzeichnet, dass** die Aktuatoranordnung (40) wenigstens einen Pumpenaktuator (48) aufweist, der die elektromotorisch angetriebene Aktuatorpumpe (50) beinhaltet, die einen Druckanschluss (54) aufweist, der über eine Ventilanordnung (58) mit einem Aktuatorzylinder (56) zum Betätigen der wenigstens einen Komponente (23) verbunden ist, wobei die Ventilanordnung (58) umschaltbar ist, um einen an dem Druckanschluss (54) bereitgestellten Fluidvolumenstrom zu dem Hydromotor (64) der Startereinrichtung zu leiten.

3. Verfahren zum Starten eines Verbrennungsmotors in einem Antriebsstrang (10) eines Kraftfahrzeuges nach einem der Ansprüche 1 - 2 mit den Schritten:
- Erhalten eines Startbefehls für den Verbrennungsmotor (12);
- Ansteuern der
Aktuatoranordnung (40) der Getriebeanordnung (14) dazu, den Verbrennungsmotor (12) zu starten.

## Claims

1. Drivetrain (10) for a motor vehicle, having
- an internal combustion engine (12) and a starter device (64), wherein the internal combustion engine can be started by means of the starter device,
- a gearbox arrangement (14) via which the drive power can be conducted from the internal combustion engine (12) to an output (16) of the motor vehicle and which has at least one component (23; 32) which can be actuated in a manner which can be automated, and
- an actuator arrangement (40) , which has at least one electric actuator motor (52; 78), by means of which the at least one component (23; 32) of the gearbox arrangement can be actuated,
wherein the at least one electric actuator motor (52; 78) is coupled to the starter device in order to be able to start the internal combustion engine (12) by means of the at least one electric actuator motor (52; 78),
**characterized in that**
the starter device has a hydraulic motor (64), by means of which the internal combustion engine (12) can be started, wherein the hydraulic motor (64) can be connected to a fluid line (55) of a hydraulic circuit (42) of the actuator arrangement (40), wherein the hydraulic circuit (62) has an actuator pump (50), which is driven by means of the at least one electric actuator motor (52) and is designed to provide a fluid volume flow for driving the hydraulic motor (64) in the fluid line (55).

2. Drivetrain according to Claim 1, **characterized in that** the actuator arrangement (40) has at least one pump actuator (48), which includes the electromotively driven actuator pump (50), which has a pressure connection (54) which is connected via a valve arrangement (58) to an actuator cylinder (56) for actuating the at least one component (23), wherein the valve arrangement (58) can be switched to conduct a fluid volume flow provided at the pressure connection (54) to the hydraulic motor (64) of the starter device.

3. Method for starting an internal combustion engine in a drivetrain (10) of a motor vehicle according to one of Claims 1-2, having the steps:
- receiving a start command for the internal combustion engine (12);
- activating the actuator arrangement (40) of the gearbox arrangement (14) to start the internal combustion engine (12).

## Revendications

1. Chaîne cinématique (10) pour un véhicule automobile, comprenant
- un moteur à combustion interne (12) et un dispositif de démarrage (64), le moteur à combustion interne pouvant être démarré au moyen du dispositif de démarrage,
- un agencement de transmission (14) par lequel la puissance d'entraînement peut être amenée du moteur à combustion interne (12) à une sortie (16) du véhicule automobile, et qui présente au moins un composant (23 ; 32) pouvant être actionné de manière automatisable, et
- un agencement d'actionneur (40) qui présente au moins un moteur d'actionneur électrique (52 ; 78) au moyen duquel ledit au moins un composant (23 ; 32) de l'agencement de transmission peut être actionné,
ledit au moins un moteur d'actionneur électrique (52 ; 78) étant couplé au dispositif de démarrage afin de pouvoir démarrer le moteur à combustion interne (12) au moyen de l'au moins un moteur d'actionneur électrique (52 ; 78),
**caractérisée en ce que** le dispositif de démarrage présente un moteur hydraulique (64) au moyen duquel le moteur à combustion interne (12) peut être démarré, le moteur hydraulique (64) pouvant être relié à une conduite de fluide (55) d'un circuit hydraulique (42) de l'agencement d'actionneur (40), le circuit hydraulique (62) présentant une pompe d'actionneur (50) qui est entraînée au moyen de l'au moins un moteur d'actionneur électrique (52) et est réalisée pour fournir dans la conduite de fluide (55) un débit volumique de fluide pour entraîner le moteur hydraulique (64).

2. Chaîne cinématique selon la revendication 1, **caractérisée en ce que** l'agencement d'actionneur (40) présente au moins un actionneur de pompe (48) qui comprend la pompe d'actionneur (50) entraînée par moteur électrique, qui présente un raccord de pression (54) qui est relié par un agencement de soupape (58) à un vérin d'actionneur (56) pour actionner ledit au moins un composant (23), l'agencement de soupape (58) pouvant être commuté pour acheminer un débit volumique de fluide fourni au niveau du raccord de pression (54) au moteur hydraulique (64) du dispositif de démarrage.

3. Procédé servant à démarrer un moteur à combustion interne dans une chaîne cinématique (10) d'un véhicule automobile selon l'une quelconque des revendications 1 à 2, comprenant les étapes consistant à :
- recevoir un ordre de démarrage pour le moteur à combustion interne (12) ;
- piloter l'agencement d'actionneur (40) de l'agencement de transmission (14) pour qu'il démarre le moteur à combustion interne (12).
